# EUROPEAN PATENT SPECIFICATION

(11) **EP 1 869 841 B1**
(45) Date of publication and mention of the grant of the patent: **16.12.2009**
(21) Application number: 06726466.3
(22) Date of filing: 22.03.2006
(51) Int. Cl.: H04L 12/56, H04L 29/06

(54) **ESTABLISHING A COMMON PDP CONTEXT FOR PROVIDING AN IP MULTIMEDIA COMMUNICATION SESSION TO A MOBILE USER EQUIPMENT**
HERSTELLEN EINES GEMEINSAMEN PDP-KONTEXTS ZUR BEREITSTELLUNG EINER IP-MULTIMEDIA-KOMMUNIKATIONSSITZUNG FÜR EIN MOBILFUNK-ENDGERÄT
ETABLISSEMENT D'UN CONTEXTE PDP COMMUN POUR FOURNIR UNE SESSION DE COMMUNICATION MULTIMEDIA IP A UN EQUIPEMENT D'UTILISATEUR MOBILE

(30) Priority: 24.03.2005 GB 0506285
(43) Date of publication of application: 26.12.2007
(73) Proprietor: FRANCE TELECOM, 75015 Paris (FR)
(72) Inventor: CHEN, Xiaobao, Swindon Wiltshire SN5 5DQ (GB); SAMPSON, Nick, Bishopston, Bristol BS7 8NY (GB)
(74) Representative: Thiel, Frédéric
(86) International application number: PCT/GB2006/001042
(87) International publication number: WO 2006/100475

(56) References cited:
- WO-A-03/065680
- WO-A-2004/100495
- US-A1- 2004 187 021
- US-A1- 2004 223 489
- 3GPP TSG-CN WG3: "CRs to Rel-6 on Work Item "TEI", NP-040247"[Online] 25 May 2004 (2004-05-25), pages 1-18, XP002384172 Retrieved from the Internet: URL:http://www.3gpp.org/ftp/TSG_CN/TSG_CN/ TSGN_24/Docs/PDF/NP-040247.pdf> [retrieved on 2006-06-06]

## Description

### Field of the Invention

The present invention relates to telecommunications systems for providing internet protocol multimedia communications sessions to mobile user equipment using packet radio networks, such as for example those which operate in accordance with the General Packet Radio System (GPRS).

### Background of the Invention

The GPRS has been developed to communicate internet packets via a radio access interface. A GPRS network can be formed using a Global System for Mobiles (GSM) or a Universal Mobile Telecommunications System (UMTS) backbone network. GPRS provides support for packet-orientated services and attempts to optimise network and radio resources for packet data communications such as for example Internet Packets (IP). The GPRS provides a logical architecture, which is related to the circuit switched architecture of a mobile radio system.

In GPRS/UMTS networks, each mobile user equipment needs to set up at least one GPRS/UMTS communications session represented by packet data protocol (PDP) Context, to send and receive data. Each GPRS/UMTS session is each specific to the mobile user equipment. As such a mobile user equipment must use its own specific PDP context to send and receive data. In addition, the PDP Context is specific to the type of internet packet data which the mobile user equipment sends through the GPRS/UMTS communications session.

Internet protocol multi-media subsystems provide a network of system elements for supporting multi-media communications sessions. The 3^{rd} Generation Project Partnership (3GPP) has developed an Internet protocol Multi-media Sub-system (IMS) standard for supporting multi-media communications session using a Session Initiation Protocol (SIP) session management protocol. For mobile applications a multi-media communications session may be supported by a GPRS/UMTS network in combination with an IMS network. However in some applications limitations in the GPRS network architecture with respect to establishing communications bearers can be inflexible.

US -A- 2004/0223489 describes a system in which IMS (IP Multimedia Sub-system) components are adapted in order to allow the multiplexing of multiple sessions on a single authorised PDP context.

### Summary of Invention

According to the present invention there is provided a telecommunications system provides an internet protocol multimedia communications session to a mobile user equipment. The telecommunications system comprises an internet protocol multimedia subsystem including a call state control function operable to control the multimedia communications sessions, and a home subscriber server operable to provide information associated with the mobile user equipment for providing the communications session. A packet radio network is operable to provide a mobile communications facility to the mobile user equipment to support the multimedia communications session. The packet radio network includes a gateway support node operable to provide a packet data protocol context for controlling the communication of internet packets to and/or from the packet radio network from and/or to the mobile user equipment via a packet communications bearer, the packet communication bearer not being specific to an internet protocol version according to which the internet packets are communicated. The call state control function is operable in response to a request message from the mobile user equipment for the communications session to be established, to generate an authorisation token for the mobile user equipment in accordance with subscriber information representing a service to which the mobile user equipment has subscribed. The request message from the mobile user equipment identifies that the communications session requested is for one of a group communications session sharing a communications resource, or a single communications session for which a communications resource is dedicated to the mobile user equipment. The authorisation token generated by the serving call state control function for communication to the mobile user equipment provides an indication that the mobile user equipment can use correspondingly one of a common communications bearer or a dedicated communications bearer via which the communications session can be supported. Upon receipt of the authorisation token, the mobile user equipment is operable to send a packet data protocol context request to the gateway support node, the packet data protocol context request including the token and a packet data protocol context type value representing a request for the establishment of the common communications bearer in accordance with an internet protocol version and an internet protocol address specified by the mobile user equipment. The gateway support node is operable in response to the packet data protocol context request to establish a communication bearer in accordance with the internet protocol version specified by the mobile user equipment.

In order to access and manage an IMS session and packet radio network resources it is necessary to be authorised, based on a user subscription level and authentication information. The user subscription level and the authentication information is typically provided by a home subscriber server of the IMS network. In existing arrangement according to the GPRS/UMTS, each IMS session is authorised to access a unique UMTS bearer and correspondingly, the UMTS network resources. However there is at present little or no arrangement for sharing IMS sessions.

With the advance of high-speed/broadband radio access technologies, the need for multiplexing a number of IMS sessions over the same UMTS bearer has been recognised in conceiving the present invention, in order to increase resource utilisation without necessarily compromising an achievable end to end quality of service.

According to an implementation the above mentioned limitations of known packet radio networks are addressed by reducing restrictions imposed by internet protocol version specific GPRS/UMTS communications sessions management by providing a common packet data protocol context type. As such a mobile user equipment to send both IPv4 internet packets and IPv6 internet packets as specified by the mobile user equipment and to share the same GPRS/UMTS session including the high-speed broadband radio bearers.

Embodiments of the present invention can therefore provide a hierarchical authorisation framework for supporting single IMS or multiple IMS communications session authorisations. A telecommunications system and method is provided which aims to overcome limitations of existing IMS session token-based authorisation procedures. To this end, a request is generated by a mobile user equipment identifying that a communications session is requested for one of a group communications session sharing a communications resource, or a single communications session in which a communications resource is dedicated to the mobile user equipment. The request is received by the serving call state control function via the packet radio network, and an authorisation token is generated by the serving call state control function for communication to the mobile user equipment. The authorisation token provides an indication that the mobile user equipment can use correspondingly one of a common communications bearer or a dedicated communications bearer via which the communications session is to be supported.

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 is a schematic block diagram of a telecommunications system including a packet radio network which conforms to the GPRS/UMTS standard;
Figure 2 is a schematic block diagram providing a simplified representation of the GPRS/UMTS network shown in Figure 1, illustrating communication of internet packets via a packet communications bearer;
Figure 3 is a schematic block diagram of the GRPS/UMTS network shown in Figure 2 illustrating an arrangement in which a mobile user equipment sets up a common packet data protocol context;
Figure 4 is a message flow diagram illustrating a process of performing a packet data protocol activation request;
Figure 5 is a schematic block diagram of the GRPS/UMTS network shown in Figure 3 illustrating a further operation of the process of setting up a common packet data protocol context;
Figure 6 is a schematic representation of an end user address information element submitted as part of the packet data protocol (PDP) context activation;
Figure 7 provides a table of values which can be used to fill a PDP type organisation field in the end user information element of Figure 6;
Figure 8 is a schematic representation of an end user address information element for establishing an IPv4 PDP context;
Figure 9 is a schematic representation of an end user address information element for establishing an IPv6 PDP context;
Figure 10 is a schematic representation of an end user address information element for establishing a common packet data protocol context, wherein the mobile user equipment wishes to communicate using IPv4;
Figure 11 is a schematic representation of an end user address information element for establishing a common packet data protocol context, wherein the mobile user equipment wishes to communicate using IPv6;
Figure 12 is a schematic representation of a traffic flow template information element;
Figure 13 is a schematic representation of the GRPS/UMTS network shown in Figure 3 illustrating a plurality of mobile user equipment establishing packet data protocol contexts, including common packet data protocol contexts, which can communicate using a common GPRS bearer;
Figure 14 is a schematic representation of parts of the GPRS/UMTS network of Figure 3 and 5, providing separate GPRS bearers to two of the mobile user equipment shown in Figure 13, which share a common packet data protocol context;
Figure 15 is a schematic representation of parts of the GPRS/UMTS network of Figure 3 and 5, providing a common GPRS bearers for supporting internet protocol communications to and/or from two of the mobile user equipment shown in Figure 13, which share the common packet data protocol context;
Figure 16 is a schematic representation of parts of the GPRS/UMTS network of Figure 15, illustrating the operation of the radio network controller to communicate internet packets to the two mobile user equipment which share a common packet data protocol context and a common packet data protocol bearer, using a radio access bearer filter;
Figure 17 is a schematic block diagram of parts of a GPRS/UMTS network corresponding to the representation shown in Figures 3 and 5, with an internet protocol multi-media sub-system (IMS), via which three mobile user equipment are sharing an IMS session;
Figure 18 is a schematic block diagram of a general representation of elements which are used to perform session set-up with media authorisation for communicating using an IMS;
Figure 19 is a schematic representation of an authorisation token generated as part of the session authorisation procedure represented in Figure 18, adapted to authorise either a single IMS session or a group IMS session;
Figure 20 is a schematic representation of a further example of an authorisation token generated as part of the session authorisation procedure represented in Figure 18, adapted to authorise either a single IMS session or a group IMS session; and
Figure 21 is a message flow diagram illustrating a process through which a plurality of mobiles perform a session set-up and authorisation for a group communications session sharing a common GPRS bearer.

### Description of the Preferred Embodiments

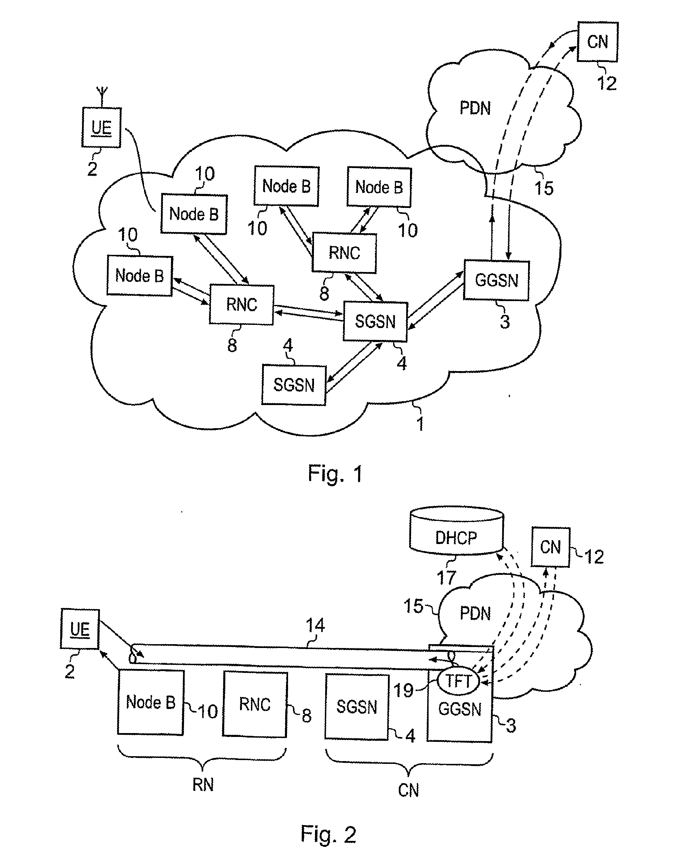

Figure 1 provides a schematic block diagram of a GPRS/UMTS packet radio network 1 for communicating internet packets between a mobile user equipment (UE) 2 and a correspondent node (CN) 12, which is attached to an external packet data network 15. In Figure 1 the UE 2 is arranged to host an application program providing, for example a multimedia service to a user. Figure 1 shows elements of a GPRS network which are a GPRS gateway service mode (GGSN) 4 a serving GRPS support mode (SGSN) 6 and a radio network controller (RNC) 8. As shown Figure 2, which provides a simplified representation of the GPRS network shown in Figure 1, generally the GGSN 4 and the SGSN 6 form parts of a core network, CN, whereas the radio network controller RNC 8 forms part of a radio network RN. As shown in Figure 2, in a simplified form for the present description, the GPRS network 1 is providing an internet protocol bearer 14 for which a packet data context has been established. As will be explained shortly, a packet data protocol context provides a protocol for ensuring that a appropriate bearer is established, providing a quality of service for which the UE 2 has subscribed and for enforcing an authorised use of the bearer. The bearer 14 is established for the user equipment UE 2 for conveying internet packets via the GPRS network to the correspondent node. The internet packets egress from the GPRS network 2 from the GGSN 4 to a packet data network 12 operating in accordance with the same internet protocol as that for which the internet protocol bearer has been established.

It will be appreciated that GPRS is one example of a packet radio network with which the present technique finds application. As such the GGSN may be referred to more generally herein as a gateway support node and the SGSN may be referred to more generally as a serving support node.

### Common PDP Context

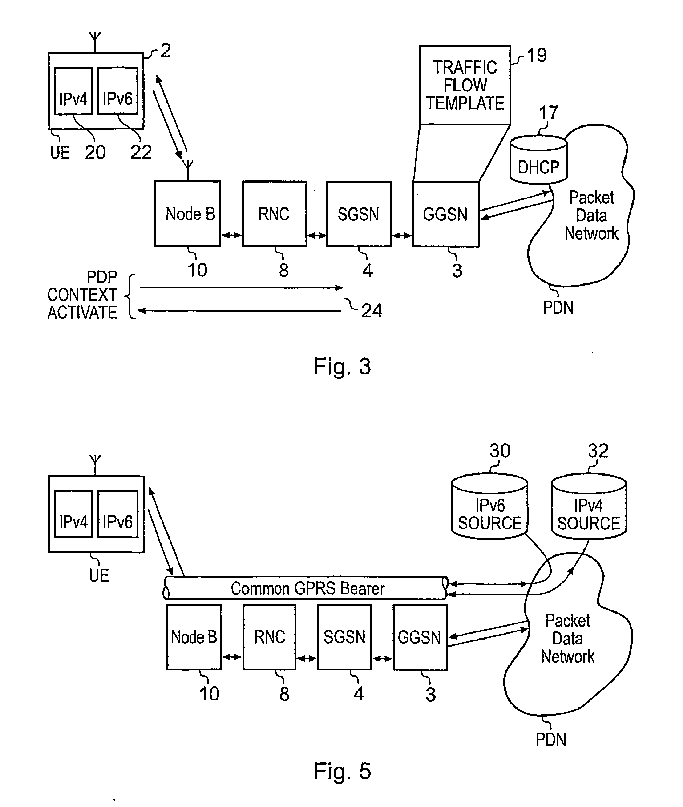

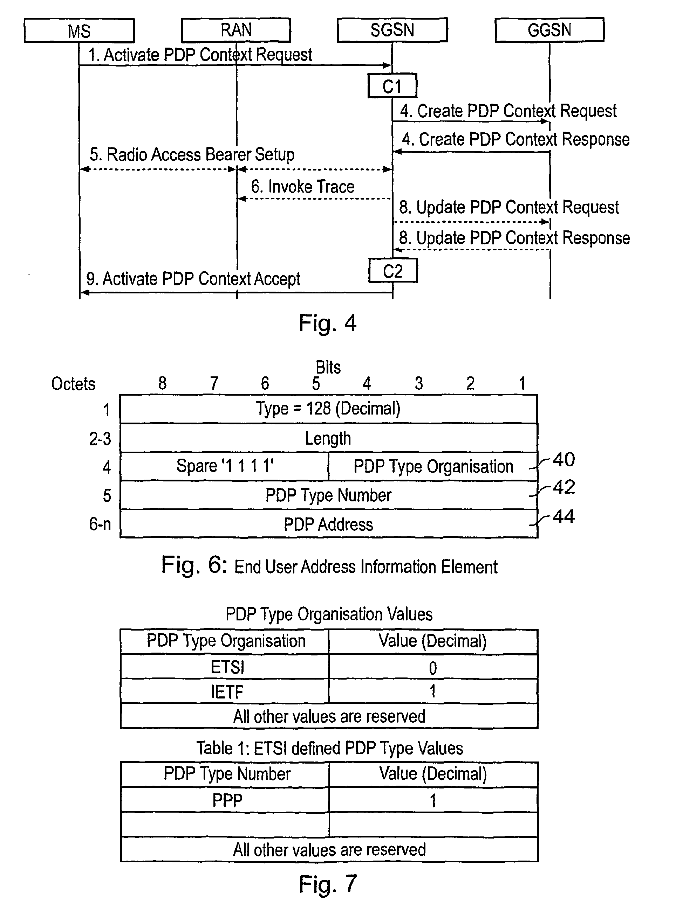

Figure 3 presents an example of the present technique in which a mobile user equipment UE is arranged to establish a common PDP context. Parts also shown in Figure 2 have corresponding reference numerals. As shown in Figure 3 the UE has a dual protocol stack. That is the UE 2 contains an IPv4 internet protocol stack 20 and an IPv6 internet protocol stack 22. Thus, the UE 2 may wish to use one or both of an IPv4 address and in IPv6 address establishing a communication session in accordance with an IPv4 and an IPv6 respectively. To this end, the UE 2 sends a packet data protocol (PDP) context activation request as illustrated by arrows 24 to the SGSN 4. Those acquainted with the GPRS standard will know that the PDP context activation procedure establishes the appropriate control and routing for the activation of a bearer across the GPRS network in accordance with the packet data protocol. The PDP context activation procedure is illustrated in Figure 4. The PDP context activation procedure will not be explained in detail because this is known from the 3GPP document TS 24.229 following establishment of a GPRS bearer, the UE 2 then communicates information for establishing a Traffic Flow Template (TFT) 19 in the gateway support node (GGSN) (also shown in Figure 2). As will be explained shortly the TFT is arranged to filter incoming packets in order to identify the appropriate PDP context, which has been established by the UE, so that the corresponding internet packet bearer across the GPRS network can be selected.

The known PDP context activation for establishing a GPRS/UMTS session as defined in existing GPRS/UMTS standard specifications, requires the following which can make each GPRS/UMTS session/PDP Context IP type specific:
1. The PDP Context Activation Request must indicate what type of PDP is to be set up: PPP type, IPv4 type, IPv6 type.
2. End User Address which contains a PDP Address (an IP address) will need to be empty to be allocated an internet protocol address, as the result of a successful set-up of PDP Context if the UE chooses to use dynamic IP address allocation.

Both PDP Type and the PDP Address are encoded in End User Address Information Element (Ref: TS 29.060), which will be explained shortly.

As shown in Figure 5, in accordance with the present technique, a common PDP is established for communicating either IPv4 internet protocol packets or IPv6 packets or both IPv4 and IPv6 packets to and from the UE 2. As such the UE 2 may receive internet packets from an IPv6 source 30 or an IPv4 source 32 via a packet data network PDN.

As explained above the PDP context is established for either an IPv4 address or an IPv6 address or a point to point protocol (PPP) address type. To establish either an IPv4 or an IPv6 bearer the mobile user equipment UE communicates as part of the PDP context an end user address information element comprising fields of a predetermined number of bytes identifying particular parameters. An example of a generic form of the end user address information element is shown in Figure 6. As shown in Figure 6 one of the fields 40 provides a packet data protocol (PDP) type organisation, a further field specifies the PDP type number 42, and a further field 44 specifies the PDP address. According to the present 3GPP standard the PDP type organisation values and PDP type number which are provided within the data fields 40, 42 of the information element shown in Figure 6, are shown in Figure 7. However, although a further explanation will not be given here because this is part of the known standard.

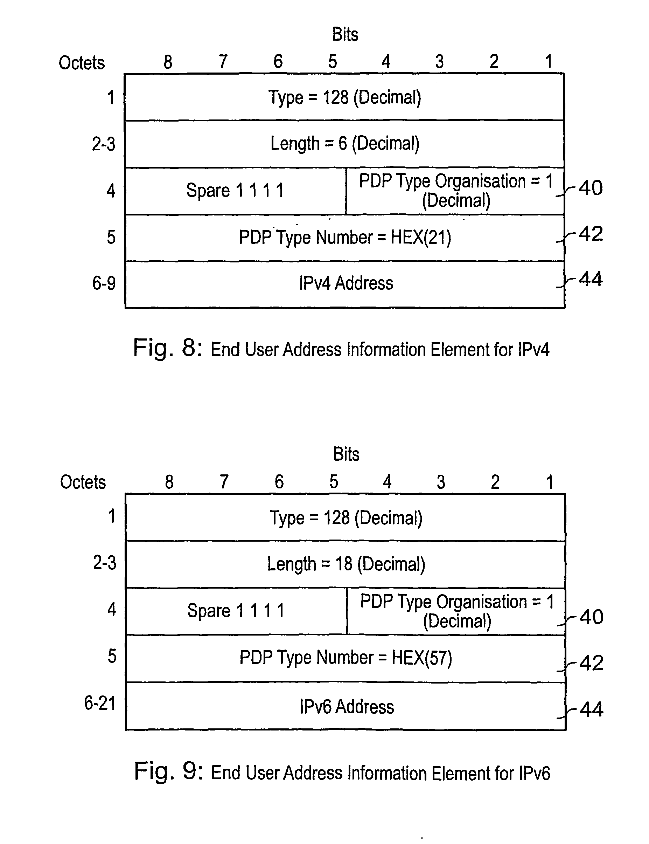

If the UE 2 is to activate a PDP context of an IPv4 bearer then the end user address information element of Figure 6, is adapted to a form shown in Figure 8. In contrast, if the UE 2 is to activate a PDP context for an IPv6 bearer then the end user address information element information of Figure 6 is adapted to a form shown in Figure 9 is used. As can be seen in Figures 8 and 9 the PDP organisation type field 40 is set to 1, in accordance with the table shown in Figure 7. For the IPv4 PDP context, the information element of the PDP type number field 42 is set to hexadecimal (21). For the IPv6 PDP context the end user address information element shown in Figure 9 also provides a PDP type organisation equal to 1, but the PDP type number field 42 specifies hex (57) to indicate that the bearer should be an IPv6 bearer.

There are now two alternatives for specifying an IPv6 and IPv4 PDP context. If the UE 2 wishes is to use its own IPv4 or IPv6 addresses then the end user address information element includes in the IP address field 44 either the IPv4 address or the IPv6 which is filled by UE with a specified IPv4 or IPv6 address. In contrast, as shown in Figures 2 and 3, the internet protocol address which the UE is to use may be requested as part of the PDP context activation and in this case the address is provided by a DHCP server. Therefore, in the case where the UE is requesting an IP address. The address field 44 is left empty (set to zero bytes) for each of the address fields 44 shown in Figure 8 and 9.

According to the present technique as illustrated in Figures 3 and 5 the mobile user equipment UE may establish a common PDP context. A common PDP context establishes a bearer, in accordance with a packet data protocol, for communicating internet packets across a GPRS network. As part of the packet data protocol, policy enforcement, quality of service and routing are established in order to arrange for the internet packets to be communicated via the established bearer. However, the common PDP context establishes a bearer which is not specific to any internet protocol version and furthermore may be shared between more than one communication session. Furthermore, the communication sessions may be from different mobile user equipment. Alternatively, a common PDP context may be established for more than one communication session although the communication session may use separate internet protocol bearers. Therefore a common PDP Context is defined to be a PDP Context that is common to PPP data frames, IPv4 and IPv6 packets, in fact to any other data protocols. A GPRS/UMTS session with a common PDP context can be used for transmitting and receiving PPP frames, IPv4 and IPv6 packets as well as any other format of data packets in compliance with a data transport protocol.

The procedure for setting up a GPRS/UMTS session with Common PDP Context is similar to that for a conventional PDP context mentioned above, except that the PDP Type is NULL. The PDP Type is set to be NULL so as to be maximum interoperable with existing GPRS/UMTS session management processes. In case of UE requesting for a dynamic IP address (either IPv4 or IPv6), the PDP Address in the end user address is left empty as it is defined in existing GPRS/UMTS session set-up process. In fact, this IP address specific element will enable the UE's to generate and receive either IPv4 or IPv6 packets while they share the same common PDP context.

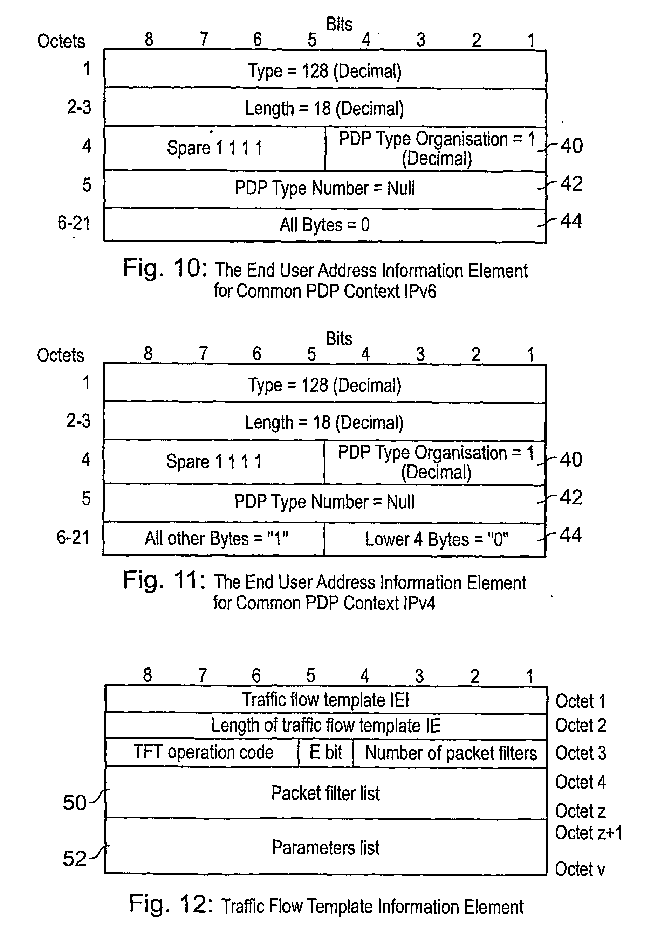

According to the present technique the common PDP context is established for a non specific internet protocol version using an end user address information element which includes a PDP type number set to a predetermined value identifying that the gateway support node should establish a common PDP context. Once a PDP context has been established, then if the gateway support node receives a further request for a common PDP context, then the communication session for which that PDP context is initiated will be arranged to join the common PDP context. However, although the common PDP context is not specific to a particular internet protocol version, the UE 2 still specifies the address which is to be used in accordance with the internet protocol version for which the communications session is established. Thus, the UE establishes the common PDP context with for example an IPv4 address or an IPv6 address. In accordance with the present technique an end address information element for an IPv6 common PDP context identifies that the PDP type is common by identifying in the PDP type number field 42 predetermined characters for example which are set to "NULL". The PDP address field 44 is then either filled with an IPv6 address if the UE is specifying the IPv6 address which it wishes to use, or bytes 6 to 21 of the information element are set to "zero" (see Figure 10). As such the gateway support node knows that the common PDP context is to be established for an IPv6 address using the address specified or if the PDP address field is set to zero requests an IPv6 address from the DHCP server 17.

Correspondingly, if the UE 2 is establishing the common PDP context for an IPv4 address, then as shown in Figure 11, with the PDP type number field 42 set to "NULL", the IPv4 address is set to the lower four bytes of the PDP address field 44. The remaining nine bytes are set to "1". Alternatively, if the mobile user equipment wishes to request an IPv6 address from the gateway support node 3 then the lower four bytes are set to a predetermined value for example "0" with the remaining nine bytes set to "one". Accordingly, the gateway support node 3 then fetches an IPv4 address from the DHCP server 17 and fills the lower four bytes with the IPv4 address.

As indicated above with reference to Figures 2 and 3, once the common PDP context has been established, then a Traffic Flow Template (TFT) is set by the UE 2 in the GGSN 3. To this end, as part of the PDP context activation process a traffic flow template information element is communicated to the GGSN by the UE. Figure 12 provides a representation of each of the fields of the traffic flow template information element in accordance with a known 3GPP standard. As illustrated in Figure 12 one of the fields 50 of the information element provides a packet filter list and another of the fields 52 provides a parameter list. The packet filter field 50 specifies a packet filter component type identifier upon which internet packets are to be filtered. Annex 1 provides a specification of the packet component type identifiers. These include either an IPv4 source address type or an IPv6 source address type or various other parameters. Thus once a component type is specified in the packet filter list field 50 a parameter on which that type is to be filtered is specified in the parameter list field 52.

### Traffic Flow Template for Common PDP Context

According to the present technique once a UE has established a common PDP context then a packet filter type identifier is specified for filtering IP packets to identify the common PDP context. Thus the mobile user equipment establishes a TFT for the common PDP context. To this end, a further packet filter component type identifier is established with for example a bit pattern "00110001". Thus once the common PDP context has been established for a UE, a TFT is set up for that UE specifying a packet filter component for a common PDP address type. The parameter for filtering the common PDP address type will then be either the IPv4 address or the IPv6 address which the mobile user equipment has specified for using the common PDP context.

The packet filter components in the TFT for Common PDP Context are non IP type specific. In order to maximise interoperability with existing operational requirements and procedures of TFT based operators (such as secondary PDP Context selection/QoS differentiation), two new fields are defined to be incorporate into a TFT information element in accordance with the present technique which are a common PDP Address Type and a common PDP Address. The modified TFT information element for common PDP Context with a common PDP Address Type field as one of its packet filter component is defined as:

| 8 7 6 5 4 3 2 1 | |
|---|---|
| 0 0 1 1 0 0 0 1 | Common PDP address type |
| 0 0 0 1 0 0 0 0 | IPv4 source address type |
| 0 0 1 0 0 0 0 0 | IPv6 source address type |
| 0 0 1 1 0 0 0 0 | Protocol identifier/Next header type |
| 0 1 0 0 0 0 0 0 | Single destination port type |
| 0 1 0 0 0 0 0 0 | Destination port range type |
| 0 1 0 1 0 0 0 0 | Single source port type |
| 0 1 0 1 0 0 0 1 | Source port range type |
| 0 1 1 0 0 0 0 0 | Security parameter index type |
| 0 1 1 1 0 0 0 0 | Type of service/Traffic class type |
| 1 0 0 0 0 0 0 0 | Flow label type |

When the UE creates a TFT for using a Common PDP Context, it sets the Common PDP Source Address type to be "0 0 1 1 0 0 0 1" and the Packet Filter component for the Common PDP Address itself is 16 bytes long. The Common PDP Address Type no longer uses Source Address Type because the packet filter based on destination address may be necessary to distinguish Common PDP Context from Primary/Secondary PDP Context. For UEs that send and receive IPv4 packets, the packet filter component for the PDP Address occupies the lower 4 bytes of the 16 bytes long PDP Address packet filter component, and the higher 12 bytes are filled with value of "0". For UE that send and receive IPv6 packets, the packet filter component for the PDP Address occupies the whole 16-byte long packet filter component. For the situation in which more then one UE is sharing the Common PDP Context, there is correspondingly more than one TFT associated with the Common PDP Context, each TFT is used to match an incoming packet to the Common PDP Context, which is necessary when there are co-existing Common PDP Context, Primary PDP Context and Secondary PDP Context (see below).

### Selecting Common PDP Context from other PDP Contexts

As indicated above, several UEs may have different types of PDP Contexts active at the same time, which are all managed and terminated at the GGSN. The different PDP Contexts can be Common PDP Context, Primary IPv4 or IPv6 PDP Context and Secondary IPv4 or IPv6 PDP Contexts (the latter two are the 3GPP standard defined). A packet arriving at the GGSN will need to be delivered across the appropriate PDP Context due to specific requirements such as Quality of Service, charging, security, etc. The 3GPP standard defined TFT is used to distinguish and select the Primary and Secondary PDP Contexts (either IPv4 or IPv6) by using a combination of packet filters. For Common PDP Contexts, which may be shared by UE's that send and received both IPv4 and IPv6 packets, there are two alternatives for distinguishing between Common PDP Contexts from existing standard defined Primary/Secondary PDP Contexts, which are explained in the following paragraphs.

In the first alternative a combination of TFTs can be used. Each of the UE that uses the Common PDP Context can generate its own TFT as explained above. A packet arriving at the GGSN will follow the similar procedure as the standard TFT operations, which is to use the PDP Address packet filter. The difference is that the TFT for using/sharing Common PDP Context has the PDP Address Type code to be "0 0 1 1 0 0 0 1" as explained above. When there is one Common PDP Context only (on Primary or Secondary PDP Contexts), an internet protcol packet arriving at the GGSN will use the Common PDP Context as the default to reach the UE by selecting the appropriate bearer. When there are co-existing Common PDP Context and Primary PDP Contexts, and if the Primary PDP context does not have TFT, an incoming IP packet would be first matched to the TFT's associated with the Common PDP Context. If no match is found the Primary PDP Context is used without TFT.

When a Common PDP Context co-exists with a primary PDP context as well as a secondary PDP Context, each of which has an associated TFT (particularly useful when different Quality of Services are required for each PDP Context), an incoming internet protocol packet can be matched to either the Common PDP Context or the Primary or Secondary PDP Context using the TFT based packet filtering. This is because the packet header information is insufficient to distinguish which PDP context to use due to overlapping packet filter parameters between the TFTs associated with the Common PDP context and those for Primary/Secondary PDP Contexts. As such a second alternative may be used.

In addition to the use of different PDP Address Types for distinguishing TFT used for Common PDP Contexts from Primary/Secondary PDP Contexts, extra information is needed for deciding which PDP Context to use to deliver an incoming packet when there are co-existing Common, Primary and Secondary PDP Contexts. According to the second alternative, the internet protocol packet destination address (either IPv4 or IPv6) is added as one of the packet filter components used for the Common PDP Context. As a result, when a UE activates or joins a Common PDP Context, it creates a TFT with a PDP Address Type of "0 0 1 1 0 0 0 1" and a packet filter component using the its own IP address (either IPv4 or IPv6).

When an incoming packet arrives at the GGSN, the TFT-based operational procedure is as follows:
1. Check each TFT corresponding to the PDP source Address Types (00010000 for IPv4, 00100000 for IPv6) to see if any matching PDP context is available. If yes, use the matching PDP Context (either the Primary or Secondary) to deliver the packet.
2. If no matching TFT is found in 1), then check the TFT of the Common PDP Address Type (00110001) to see if the destination address of an incoming packet matches one of the packet filter components in the TFT. If yes, use the Common PDP Context to deliver the packet.
3. If no matching TFT is found in 1 or 2, check if there is a PDP Context without TFT. If yes, use the PDP context to deliver the packet; otherwise, discard the packet.

### Establishing/Joining a Common PDP Context

Since a Common PDP Context can be shared by more than one UE, a UE activating a Common PDP Context will simply need to join an existing Common PDP Context if it has already been established (either statically or dynamically set up).

### Modifying a GPRS/UMTS session with Common PDP Context

The same processes as defined in existing GPRS/UMTS standard specifications (TS23.060) can be used to modify a communications session. However, instead of modifying the existing Common PDP context which are being used by other UE's, the UE will need to leave the Common PDP Context first and may choose to initiate or join in a different Common PDP Context.

### Leaving or Deleting a Common PDP Context

The same process as defined in existing GPRS/UMTS standard specifications for Deleting PDP Context can be used with the common PDP context. However, if the Common PDP Context is still being used by other UE's, the Common PDP Context is not released. The UE that wishes to delete the Common PDP Context will leave the Common PDP Context by having its TFT's deleted and the associated GTP_C/GTP_U Tunnels released.

### Example Illustration of Co-existence of Different PDP Contexts

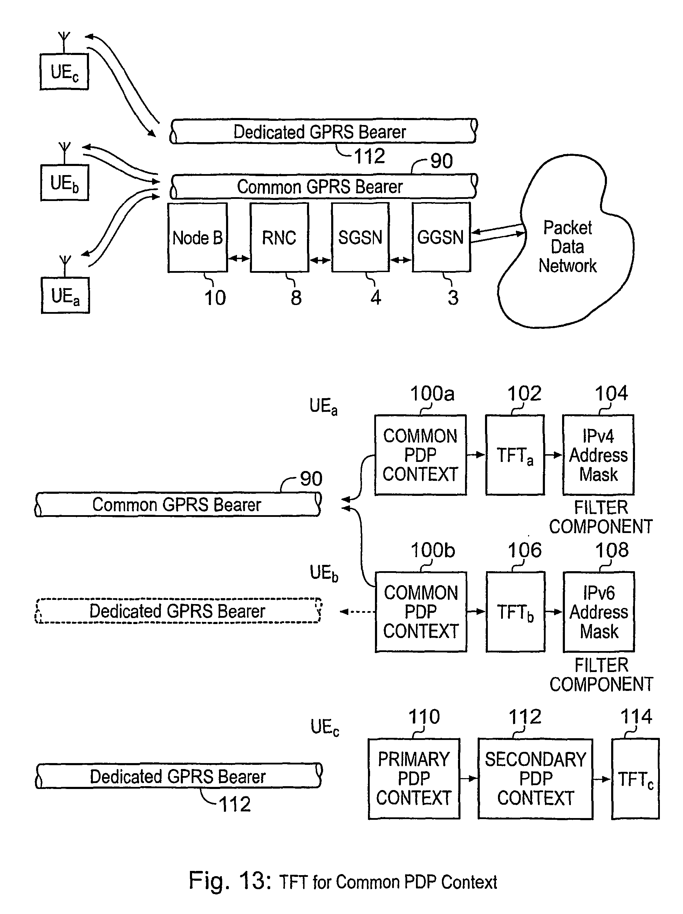

Figure 13 provides an example illustration of an arrangement in which a plurality of UEs have established PDP contexts. Two of UEs have established a common PDP context. As shown in Figure 13, three UEs UEa, UEb, UEc are communicating internet protocol packets across the GPRS network. Two of the mobile user equipment UEa, UEb have established a common GPRS bearer 90. For example the first mobile user equipment UEa may establish the common GPRS bearer by performing a PDP context activation request specifying that the PDP context should be a common PDP context as described above. The GGSN 3 then establishes a common PDP context 100 for the first DE UEa. The first UE UEa then establishes in combination with the GGSN 3 a traffic flow template TFTa which includes in the parameter list a common PDP address type. For the example shown in Figure 13 the first mobile user equipment UEa specifies that the internet protocol address which it will use for its communication session is an IPv4 address. Thus the common PDP address type specified by the TFTa is an IPv4 address as illustrated for the TFTa 102 for the parameter list 104.

The second UE UEb also sets up a common PDP context with the GGSN 3. Since the common PDP context 100 has already been established by the first UE UEa, then the GGSN 3 is arranged to join the second UE UEb to the common PDP context. However, a separate common PDP context 100 is associated with a TFT for the second UE which is a TFTb. TFTb also specifies that the packet filter component is a common PDP address type and for the second UE an IPv6 address is specified as the filter component in a field 108. Thus, each mobile user equipment UEa, UEb, UEc, establishes its own TFT. In contrast, the third UE UEc request a conventional primary PDP context activation for its own dedicated GPRS bearer 112. The third mobile user equipment UEc may establish a secondary PDP context 112 which is also arranged to communicate IP packets via a GPRS bearer although only one 112 is shown in Figure 13. For the third UE UEc a TFTc 114 is established in order to filter packets to either the primary or the secondary PDP context in accordance with a conventional arrangement. Thus as illustrated in Figure 13 two of the mobile user equipment UEa, UEb are communicating via a common GPRS bearer 90 using a common PDP context 100 although each has its own traffic flow template TFTa, TFTb. In an alternative arrangement the first and second UEs UEa, UEb may establish separate GPRS bearers 90, 114 and to communicate internet packets via these separate bearers even though they share a common PDP context.

### Common GPRS Bearer

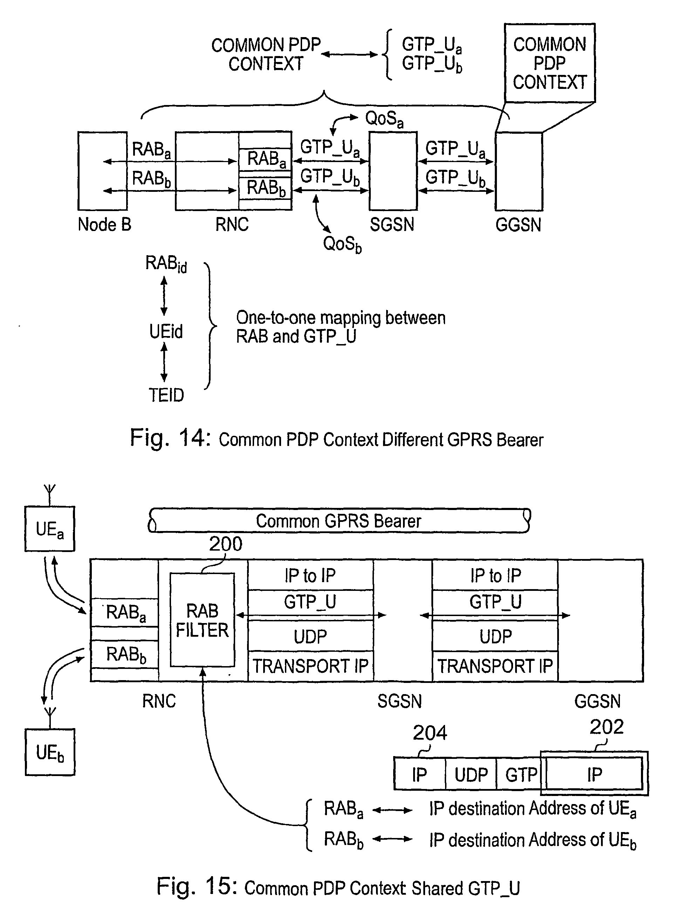

There are two possible scenarios for the first and second mobile user equipment UEa, UEb of the example represented in Figure 13 to communicate via the GPRS network 1 using the shared common PDP context. One example is shown in Figure 14. In Figure 14 the GGSN 3 establishes a separate GPRS Tunnelling Protocol (GTP) bearer GTP_UA, GTP_UB for each of the first and second UEs UEa, UEb, As shown in Figure 14 although the first and second UEs share a common PDP context, the internet protocol packets are communicated across the GPRS network via separate GTP bearers. When the internet protocol packets reach the RNC 8 for communication via a Radio Access Bearer (RAB) the separate GTP GTP_UA, GTP_UB are mapped onto corresponding radio access bearers RABa, RABb. Accordingly, each of the radio access bearers and the GTP established for each of the first and second UEs UEa, UEb can specify a different quality of service QoSa, QoSb. Thus, there is a one to one mapping between the radio access bearer and the GTP. Figure 14 is therefore an example of a common PDP context but using different GPRS bearers.

An alternative arrangement is shown in Figure 15 in which the first and second UEs UEa, UEb which have established a common PDP context utilise a common GPRS bearer. As such there is no distinction of the GTP established by the GGSN 3. That is to say the GPRS bearer is shared between the first and second UEs UEa, UEb. In order to correctly communicate internet packets across the GPRS network via the radio access interface established by the RNC, the RNC must identify internet protocol packets, which are destined for either the first UE UEa or the second UE UEb. To this end, the RNC is provided with a radio access bearer filter 200. The radio access bearer filter 200 receives the internet packets from the GTP_U and identifies an appropriate one of two radio access bearers RABa, RABb from which and to which the first and second UEs UEa, UEb communicate internet packets respectively. In order to filter the internet packets correctly onto the appropriate radio access bearers RABa, RABb, the RAB filter 200 is provided with a destination address of the first and second UEs UEa, UEb. Thus, as illustrated in Figure 15, the RAB filter 200 identifies the destination address in the header of the internet protocol packet 202 received in the GTP units 204. In accordance with the destination address for the first or the second UEs UEa, UEb, the RAB filter filters the internet protocol packets to the appropriate bearer for delivery to the corresponding UE UEa, UEb.

### Providing Different Quality of Service on a Common GPRS Bearer

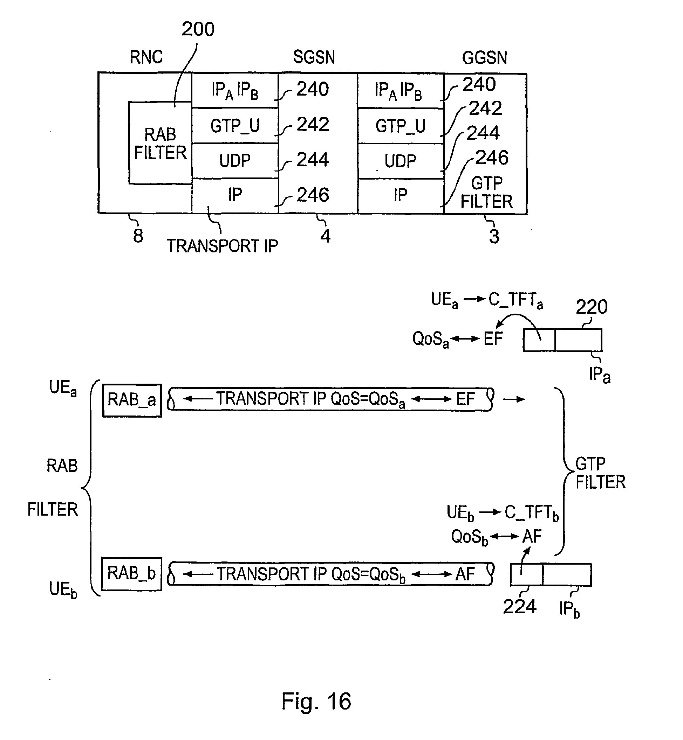

Figure 16 provides an illustrative representation of an arrangement by which different quality of service can be provided to the communication of internet packets via a common GPRS bearer. For example, one communications session may be communicating internet packets in accordance with Web browse, whereas another communications session may be communicating internet packets in accordance with voice over internet protocol. In accordance with the present technique differing quality of services are achieved by mapping a differential service quality of service (QoS) class provided within the IETF internet protocol standard onto an appropriate quality of service for communication across the GPRS core network. As those acquainted with the internet protocol standards v6 and v4 will appreciate, the differential service QoS provided within the IETF standard has three categories which are Expedited Forwarding (EF) Assured Forwarding (AF) and Best Effort (BE). As shown in Figure 16 internet packets IPa, IPb which are being communicated to either the first or the second UEs UEa, UEb 220, 224 are received at the GGSN 3. In each of the respective headers of the internet packets IPa, IPb, 220, 224 is provided a differential service QOS. For the example shown in Figure 16 the differential service QoS for the first internet packet destined for the first UE IPa 220 is EF whereas the differential service QOS for the second internet packet destined for the second UE IPb 224 is AF. The GGSN 3 is arranged to form a GTP filter which is operable to map the differential service QoSs EF and AF into an appropriate quality of service QoSa, QoSb for communication across the core network to the RNC. The quality of service provided by the GTP_U QoSa, QoSb may be the same as the EF and AF according to the IETF standards, or maybe an alternative differential in quality of service class. The first and second internet packets IPa, IPb 220, 224 are then communicated via the transport IP layer to the RNC.

As shown in Figure 16 communication between each of the core network elements GGSN, SGSN 3, 4 to the RNC 8, is via different protocol levels. These are a higher level end to end internet protocol level 240, a GTP_U internet protocol level 242, a UDP layer 244 and an internet protocol transport layer 246. Thus, the GGSN 3 is arranged to communicate the internet packets via the transport internet protocol layer using quality of service QoSa, QOSb identified from the differential quality of service AF, EF identified in the headers of each of the packets for communication to the respective first and second UEs UEa, UEb.

When the internet packets are received at the RNC, then the RAB filter 200 operates in a corresponding way to that explained with reference to Figure 15 to pass the packets from each of the internet protocol transport layers to the appropriate radio access bearer RABa, RABb. The appropriate radio access bearers are identified by the destination address of the first or second user equipment UEa, UEb. In accordance with the present technique the UEs are arranged to establish a RAB filter, when the common PDP context is established. Therefore in an analagous way in which the TFT is established, each UE sets up an appropriate component in the RAB filter, so that the internet packets received from the transport IP layer can be filtered to the appropriate radio access bearer.

### Supporting Authorisation of Multiplexing IMS Sessions

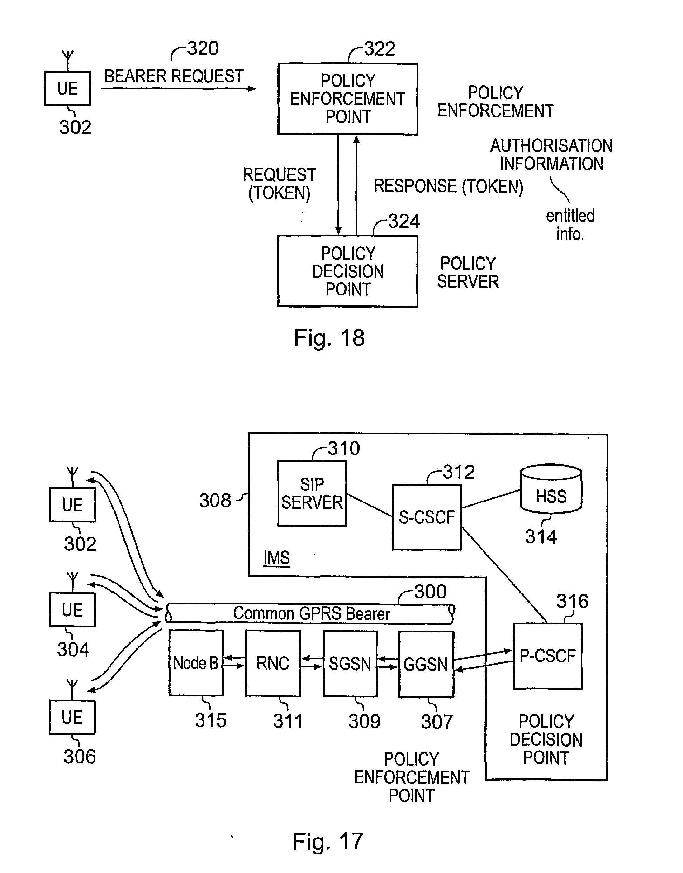

Figure 17 provides an example illustration of a common GPRS bearer 300 being used by three UEs 302, 304, 306 for a communications session via a GPRS network, which includes, as explained above, a GGSN 307, and SGSN 309, an RNC 311 and a Node B 315. In Figure 17 the UEs 302, 304, 306 wish to share a common multimedia communications session provided by an internet protocol multimedia subsystem 308. The internet protocol multimedia subsystem (IMS) comprises a Session Initiation Protocol (SIP) server 310, a Serving-Call State Control Function (S-CSCF) 312 and a Home Subscriber Server (HSS) 314. The IMS also includes a proxy call state control function (P-CSCF) 316.

A mobile user equipment may open an IMS session by sending a SIP message to a SIP server 300. This is established by sending a SIP: INVITE message to the P-CSCF 316. The P-CSCF 316 forms a policy decision point for the IMS and so analyses the request with respect to subscription information held within the HSS. If the request is approved, then the P-CSCF 316 issues an authorisation token, to authorise the UE to use an appropriate bearer for the IMS communications session. The token is generated in accordance with the 3GPP technical specifications TS23.228, TS23.207.

Figure 18 corresponds to the IMS authorisation procedure, which is established in the above-mentioned 3GPP technical specifications. Figure 18 provides a general representation of a process of generating an authorisation token on request from a UE and subsequent enforcement of a communications session in accordance with an issued authorisation token. As shown in Figure 18 one of the UEs 302 requests authorisation for an IMS session. The UE 302 sends a request for a bearer to a policy enforcement point 322. The policy enforcement point 322 forwards the token requesting a bearer to the policy decision point, which is a policy server 324. The policy server 324 then determines whether the mobile user equipment 302 is entitled to open an IMS communication session using the appropriate bearer on the GPRS network. The policy decision point 324 then generates an authorisation token, if it accepts the request, representing an authorisation for the communications session and communicates the token to the policy enforcement point 322. The policy enforcement point then informs the UE that an appropriate IMS bearer can be provided for the UE. Thus when the mobile user equipment requests an appropriate bearer from the policy enforcement point, using the token the bearer is authorised and provided to the mobile user equipment 302.

In Figure 17 the GGSN 3 acts as the policy enforcement point for providing authorisation and establishing an appropriate bearer for supporting an IMS session. However, in Figure 17 the mobile user equipment 302, 304, 306 wish to establish an IMS session across a common GPRS bearer.

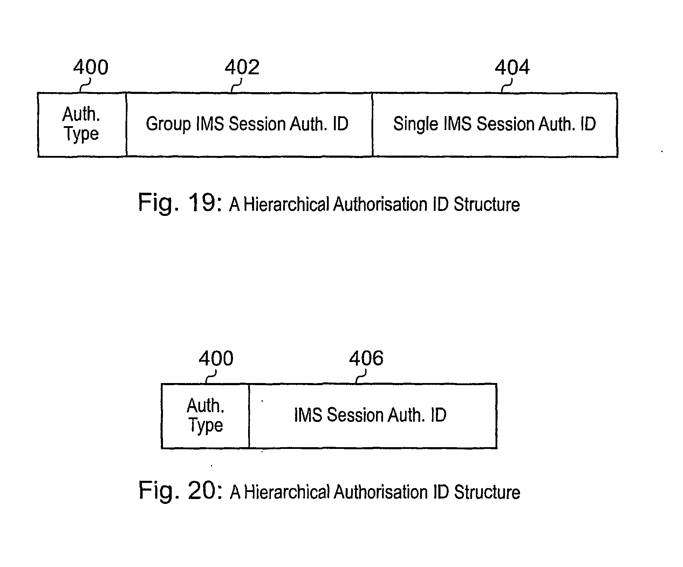

In known IMS session token authorisation procedures, there is no provision for UEs to request authorisation for a communications session which shares a common GPRS bearer, and to receive in a single token, authorisation for communications sessions which are multiplexed over a shared GPRS bearer. To this end, a hierarchical authorisation mechanism is proposed, in which a hierarchical authorisation token is generated by policy servers acting as policy decision points. An example of a hierarchical authorisation token is shown in Figure 19. The hierarchical authorisation token shown in Figure 19 provides, in a single token, authorisation for either a group IMS communications session or a single IMS communications session. As shown in Figure 19, the authorisation token generated by a policy server 316, 324 in accordance with the present technique includes an authorisation type field 400, a group IMS session authorisation identifier 402, and a single IMS session authorisation identifier field 404. The authorisation type field 400 is provided with a predetermined value, which identifies whether the IMS communication session is to use a dedicated resource/GPRS bearer or whether the IMS communication session is to use a GPRS bearer shared with other IMS communications sessions and UEs. Example values for the authorisation type field is provided as follow:
01: Group IMS session authorisation identifier
10: Single IMS session authorisation identifier

If the IMS communications session is to use a dedicated resource/GPRS bearer, then the group IMS session authorisation identifier field 402 is set to be "0" and the single IMS session authorisation identifier field 404 is provided with a unique authorisation token for the IMS session. If the communications session is to share a GPRS bearer with other IMS communications sessions, then the group IMS session authorisation identifier field 402 is provided with a unique authorisation value to define that session, and the single IMS session authorisation identifier field 404 is set to be "0". As mentioned above, the authorisation token is generated by the policy server on request from a UE, such as for example, following a SIP: INVITE message. In response, the P-CSCF 316, which acts as the policy decision point communicates with the S-CSCF 312 in the IMS network. The SCSCF then retrieves subscription data from the HSS 314 to establish whether the authorisation can be provided to establish the common GPRS bearer. If authorised, then the appropriate authorisation token is issued to the UEs 302, 304, 306.

In accordance with the PDP context activation procedure establishing a communications session, each of the UEs 302, 304, 306 sends a hierarchical authorisation token providing the authorisation identifier to the GGSN 307. The GGSN then checks the authorisation type, to determine whether the communications session is a group session or a single session.

If the value in the authorisation type field 400 indicates that the session authorised is a group IMS communications session on a shared GPRS bearer, the GGSN 307 establishes a common GPRS bearer. The GGSN 307, then analyses the group IMS session authorisation identifier to query the P-CSCF 316 (acting as Policy enforcement point) to confirm the authorisation for the IMS communications session request with the IMS.

If the value in the authorisation type field 400 indicates that the session authorised is a single IMS communications session, the GGSN 307 establishes a dedicated GPRS bearer. The GGSN 307, then analyses the single IMS session authorisation identifier to query the P-CSCF 316 (acting as Policy enforcement point) to confirm the authorisation for the IMS communications session request witch the IMS.

As alternative example, a hierarchical authorisation token could be generated with a structure as shown in Figure 20. In Figure 20, the hierarchical authorisation token includes an authorisation type field 400, which corresponds to that for the example authorisation token shown in Figure 19. However only a single field is provided to represent the IMS session authorisation identifiers which must be shared with both group authorisation identifiers and single authorisation identifiers. Thus although the example shown in Figure 20 is simpler, the address range must be partitioned to identify correctly either group session identifiers or single session identifiers.

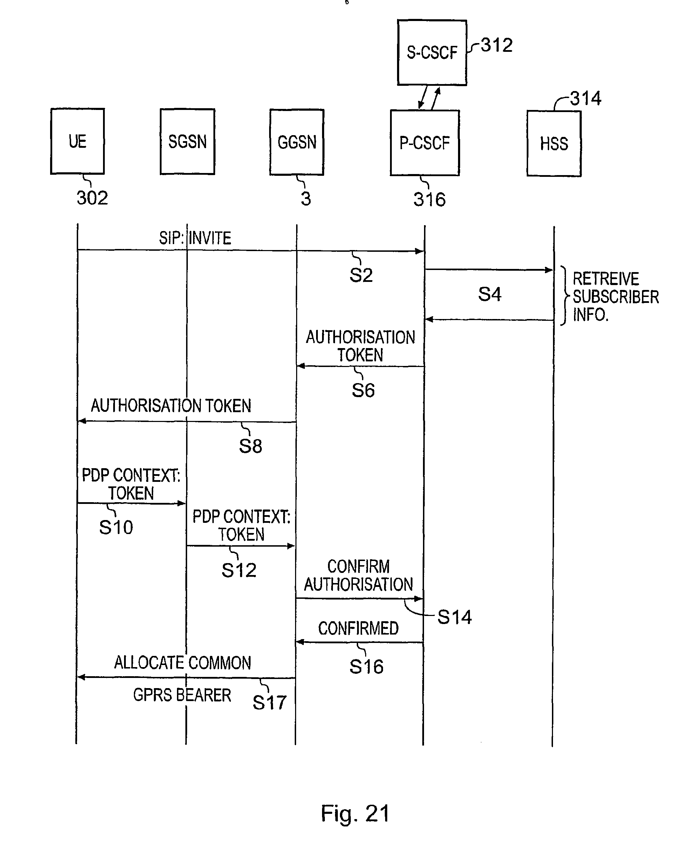

A message flow illustrating the generation and communication of the authorisation token on request from the mobile user equipment is provided in Figure 21 which is summarised as follows:
S1: A SIP: INVITE message is communicated from the mobile user equipment 302 to the P-CSCF 316.
S4: The P-CSCF 316 in combination with the SCFCF 312 then retrieves subscriber information data from the HSS 314. In accordance with the subscriber information the P-CSCF 316 then determines whether the user is authorised to receive a shared IMS communications session and whether this can be provided via a common GPRS bearer. If accepted then an authorisation token is generated by the P-CSCF providing the type of authorisation (group or single) and the session authorisation identifier for the shared or dedicated bearer, which is passed to the GGSN.
S8: The GGSN then passes the authorisation token to the mobile user equipment 302.
S10: The mobile user equipment 302 then sets up a PDP context activation request providing the authorisation token as part of the protocol configuration option field.
S12: The SGSN receives the PDP context activation request and passes the authorisation token to the GGSN 3. The GGSN then confirms that the mobile user equipment has authorisation to establish a common communication session with other mobile user equipment, by confirming the session authorisation identifier with the P-CSCF.
S16: The P-CSCF 316 then confirms that the mobile user equipment is authorised to receive a common GPRS bearer for the IMS session.
S17: GGSN 307 then establishes the GPRS bearer and informs the mobile user equipment 302 that it has been allocated the common GPRS bearer.

Various further aspects and features of the present invention are defined in the appended claims.

Embodiments of the invention herein before described are provided as example only and various modifications may be made to those embodiments without departing from the scope of the present invention. For example, it will be appreciated that GPRS/UMTS is provided as one illustrative architecture with which the present invention finds application.

### Annex 1

| | |
|---|---|
| The packet *filter* contents field is of variable size and contains a variable number (at least one) of *packet filter components*. Each *packet filter component* shall be encoded as a sequence of a one octet packet *filter* component *type identifier* and a fixed length packet *filter* component *value* field. The packet *filter* component *type identifier* shall be transmitted first. | |
| In each packet filter, there shall not be more than one occurrence of each packet filter component type. Among the "IPv4 source address type" and "IPv6 source address type" packet filter components, only one shall be present in one packet filter. Among the "single destination port type" and "destination port range type" packet filter components, only one shall be present in one packet filter. Among the "single source port type" and "source port range type" packet filter components, only one shall be present in one packet filter. | |
| Packet filter component type identifier | |
| Bits | |
| 8 7 6 5 4 3 2 1 | |
| 0 0 0 1 0 0 0 0 | IPv4 source address type |
| 0 0 1 0 0 0 0 0 | IPv6 source address type |
| 0 0 1 1 0 0 0 0 | Protocol identifier/Next header type |
| 0 1 0 0 0 0 0 0 | Single destination port type |
| 0 1 0 0 0 0 0 1 | Destination port range type |
| 0 1 0 1 0 0 0 0 | Single source port type |
| 0 1 0 1 0 0 0 1 | Source port range type |
| 0 1 1 0 0 0 0 0 | Security parameter index type |
| 0 1 1 1 0 0 0 0 | Type of service/Traffic class type |
| 1 0 0 0 0 0 0 0 | Flow label type |
| All other values are reserved. | |
| For "IPv4 source address type", the packet *filter component value* field shall be encoded as a sequence of a four octet *IPv4 address* field and a four octet *IPv4 address* mask field. The *IPv4 address* field shall be transmitted first. | |
| For "IPv6 source address type", the *packet filter component value* field shall be encoded as a sequence of a sixteen octet *IPv6* address field and a sixteen octet *IPv6* address *mask* field. The *IPv6* address field shall be transmitted first. | |
| For "Protocol identifier/Next header type", the packet *filter component value* field shall be encoded as one octet which specifies the IPv4 protocol identifier or IPv6 next header. | |
| For "Single destination port type" and "Single source port type", the *packet filter component value* field shall be encoded as two octet which specifies a port number. | |
| For "Destination port range type" and "Source port range type", the *packet filter component value* field shall be encoded as a sequence of a two octet *port range* low *limit* field and a two octet *port range high limit* field. The *port range low limit* field shall be transmitted first. | |
| For "Security parameter index", the *packet filter component value* field shall be encoded as four octet which specifies the IPSec security parameter index. | |
| For "Type of service/Traffic class type", the packet filter component value field shall be encoded as a sequence of a one octet *Type-of-ServicelTraffic* Class field and a one octet *Type-of-Service*/*Traffic* Class mask field. The *Type-of-ServicelTraffic* Class field shall be transmitted first. | |
| For "Flow label type", the packet *filter* component *value* field shall be encoded as three octet which specifies the IPv6 flow label. The bits 8 through 5 of the first octet shall be spare whereas the remaining 20 bits shall contain the IPv6 flow label. | |

## Claims

1. A telecommunications system for providing an internet protocol multimedia communications session to a mobile user equipment (302), the system comprising
an internee protocol multimedia subsystem (308) including a call state control function (312) operable to control the multimedia communications sessions, and a home subscriber server (314) operable to provide information associated with the mobile user equipment (302) for providing the communications session,
a packet radio network operable to provide a mobile communications facility to the mobile user equipment (302) to support the multimedia communications session, the packet radio network including a gateway support node operable to provide a packet data protocol context for controlling the communication of internet packets to and/or from the packet radio network from and/or to the mobile user equipment (302) via a packet communications bearer, the packet communication bearer not being specific to an internet protocol version according to which the internet packets are communicated, wherein
the call state control function (312) is operable in response to a request message from the mobile user equipment (302) for the communications session to be established, to generate and to communicate an authorisation token for the mobile user equipment (302) in accordance with subscriber information representing a service to which the mobile user equipment (302) has subscribed, the request message from the mobile user equipment (302) identifying that the communications session requested is for one of a group communications session sharing a communications resource, or a single communications session for which a communications resource is dedicated to the mobile user equipment (302), the authorisation token generated by the serving call state control function (312) for communication to the mobile user equipment (302) providing an indication that the mobile user equipment (302) can use correspondingly one of a common communications bearer or a dedicated communications bearer via which the communications session can be supported and,
upon receipt of the authorisation token, the mobile user equipment (302) is operable to send a packet data protocol context request to the gateway support node, the packet data protocol context request including the token and a packet data protocol context type value representing a request for the establishment of the common communications bearer in accordance with an internet protocol version and an internet protocol address specified by the mobile user equipment (302), the gateway support node being operable in response to the packet data protocol context request to establish a communication bearer in accordance with the internet protocol version specified by the mobile user equipment (302).

2. A telecommunications system as claimed in Claim 1, wherein the authorisation token generated by the serving call state control function includes a data field indicating an authorisation type, being one of an authorisation for a group communications session or an authorisation for a single communications session.

3. A telecommunications system as claimed in Claim 1 or 2, wherein the authorisation token includes a data field in which a unique authorisation identification number for group communications sessions is provided, and a data field in which a unique authorisation identification number for single communications sessions is provided, one or other of the data fields being provided with an identification number in accordance with whether the mobile user equipment has requested a single or group communications session.

4. A telecommunications system as claimed in Claim 1 or 2, wherein the authorisation token includes a data field in which a unique authorisation identification number is provided, and a first range of values of the data field being associated with unique authorisation numbers for group communications sessions and a second range of values of the data field being associated with unique authorisation numbers for single communications sessions.

5. A telecommunications system as claimed in any preceding Claim, wherein the call state control function is operable
to communicate the authorisation token to the mobile user equipment, the mobile user equipment being operable in response to receiving the authorisation token,
to perform a packet data protocol activation using the authorisation token, the packet radio network being responsive to receipt of the authorisation token with the packet data protocol activation to confirm with the call state control function that the authorisation identifier number received with the authorisation token is correct for the mobile user equipment from which the authorisation token was received, and if the authorisation identifier number is confirmed by the call state control function, the packet radio network is operable to provide one of a common packet communications bearer to be shared between the mobile user equipment and with other communications sessions or a dedicated packet communications bearer for use by the mobile user equipment.

6. A method of providing an internet protocol multimedia communications session to a mobile user equipment (302) using an internet protocol multimedia subsystem, which includes a call state control function (312) operable to control the multimedia communications sessions, a home subscriber server (314) operable to provide information associated with the mobile user equipment (302) for providing the communications session, and a packet radio network including a gateway support node operable to provide a packet data protocol context for controlling the communication of internet packets to and/or from the packet radio network from and/or to the mobile user equipment (302) via a packet communications bearer, the packet communication bearer not being specific to an internet protocol version according to which the internet packets are communicated, the method comprising
providing a mobile communications facility to the mobile user equipment (302) to support the multimedia communications session,
communicating a request message from the mobile user equipment (302) to the call state control function for the communications session to be established,
generating an authorisation token for the mobile user equipment (302) in accordance with subscriber information representing a service to which the mobile user equipment (302) has subscribed, wherein the communicating a request message comprises
communicating a request message from the mobile user equipment (302) identifying that the communications session requested is for one of a group communications session sharing a communications resource, or a single communications session for which a communications resource is dedicated to the mobile user equipment (302), and the generating the authorisation token comprises
generating and communicating an authorisation token from the serving call state control function (312) for communication to the mobile user equipment (302), the authorisation token providing an indication that the mobile user equipment (302) can use correspondingly one of a common communications bearer or a dedicated communications bearer via which the communications session can be supported, and
upon receipt of the authorisation token, sending a packet data protocol context request from the mobile user equipment (302) to the gateway support node, the packet data protocol context request including the token and a packet data protocol context value representing a request for the establishment of the common communications bearer in accordance with an internet protocol version and an internet protocol address specified by the mobile user equipment (302), the gateway support establishing a communication bearer in accordance with the internet protocol version specified by the mobile user equipment (302).

7. A method as claimed in Claim 6, wherein the authorisation token generated by the serving call state control function includes a data field indicating an authorisation type, being one of an authorisation for a group communications session or an authorisation for a single communications session.

8. A method as claimed in Claim 6 or 7, wherein the authorisation token includes a data field in which a unique authorisation identification number for group communications sessions is provided, and a data field in which a unique authorisation identification number for single communications sessions is provided, one or other of the data fields being provided with an identification number in accordance with whether the mobile user equipment has requested a single or group communications session.

9. A method as claimed in Claim 6 or 7, wherein the authorisation token includes a data field in which a unique authorisation identification number is provided, and a first range of values of the data field being associated with unique authorisation numbers for group communications sessions and a second range of values of the data field being associated with unique authorisation numbers for single communications sessions.

10. A method as claimed in any of Claims 6 to 9, comprising
communicating the authorisation token to the mobile user equipment,
performing using the mobile user equipment a packet data protocol activation using the authorisation token,
responding to receipt of the authorisation token with the packet data protocol activation to confirm with the call state control function that the authorisation identifier number received with the authorisation token is correct for the mobile user equipment from which the authorisation token was received, and if the authorisation identifier number is confirmed by the call state control function,
providing one of a common packet communications bearer to be shared between the mobile user equipment and with other communications sessions or a dedicated packet communications bearer for use by the mobile user equipment.

## Patentansprüche

1. Telekommunikationssystem zum Bereitstellen einer Internet-Protokoll-Multimedia-Kommunikationssitzung für ein Mobilbenutzergerät (302), wobei das System Folgendes umfasst:
ein Internet-Protokoll-Multimedia-Subsystem (308) mit einer Call State Control Function (312), die betreibbar ist, um die Multimedia-Kommunikationssitzungen zu steuern, und einem Heimatteilnehmerserver (314), der betreibbar ist, um mit dem Mobilbenutzergerät (302) assoziierte Informationen zur Bereitstellung der Kommunikationssitzung bereitzustellen,
ein Paketfunknetz, das betreibbar ist, um dem Mobilbenutzergerät (302) eine Mobilkommunikationsseinrichtung bereitzustellen, um die Multimedia-Kommunikationssitzung zu unterstützen, wobei das Paketfunknetz einen Gateway-Unterstützungsknoten enthält, der betreibbar ist, um einen Paketdatenprotokollkontext zur Steuerung der Übermittlung von Internet-Paketen zu und/oder von dem Paketfunknetz von und/oder zu dem Mobilbenutzergerät (302) über einen Paketkommunikationsträger bereitzustellen, wobei der Paketkommunikationsträger nicht für eine Internet-Protokoll-Version spezifisch ist, gemäß der die Internet-Pakete übermittelt werden, wobei
die Call State Control Function (312) als Reaktion auf eine Anforderungsnachricht von dem Mobilbenutzergerät (302) für die herzustellende Kommunikationssitzung betreibbar ist, um ein Autorisierungstoken für das Mobilbenutzergerät (302) gemäß Teilnehmerinformationen, die einen Dienst darstellen, an dem das Mobilbenutzergerät (302) teilnimmt, zu erzeugen und zu übermitteln, wobei die Anforderungsnachricht von dem Mobilbenutzergerät (302) identifiziert, dass die angeforderte Kommunikationssitzung für eine Gruppenkommunikationssitzung, die ein Kommunikationsbetriebsmittel gemeinsam benutzt, oder eine Einzelkommunikationssitzung, für die ein Kommunikationsbetriebsmittel fest dem Mobilbenutzergerät (302) zugeordnet ist, angefordert wird, wobei das durch die Serving Call State Control Function (312) zur Übermittlung zu dem Mobilbenutzergerät (302) erzeugte Autorisierungstoken eine Anzeige bereitstellt, dass das Mobilbenutzergerät (302) entsprechend einen gemeinsamen Kommunikationsträger oder einen fest zugeordneten Kommunikationsträger, über den die Kommunikationssitzung unterstützt werden kann, verwenden kann, und
das Mobilbenutzergerät (302) beim Empfang des Autorisierungstokens betreibbar ist, um eine Paketdatenprotokoll-Kontextanforderung zu dem Gateway-Unterstützungsknoten zu senden, wobei die Paketdatenprotokoll-Kontextanforderung das Token und einen Paketdatenprotokoll-Kontexttypwert enthält, wodurch eine Anforderung der Herstellung des gemeinsamen Kommunikationsträgers gemäß einer Internet-Protokoll-Version und einer Internet-Protokoll-Adresse, die durch das Mobilbenutzergerät (302) spezifiziert wird, repräsentiert wird, wobei der Gateway-Unterstützungsknoten als Reaktion auf die Paketdatenprotokoll-Kontextanforderung betreibbar ist, um einen Kommunikationsträger gemäß der durch das Mobilbenutzergerät (302) spezifizierten Internet-Protokoll-Version herzustellen.

2. Telekommunikationssystem nach Anspruch 1, wobei das durch die Serving Call State Control Function erzeugte Autorisierungstoken ein Datenfeld enthält, das einen Autorisierungstyp angibt, der eine Autorisierung für eine Gruppenkommunikationssitzung oder eine Autorisierung für eine Einzelkommunikationssitzung ist.

3. Telekommunikationssystem nach Anspruch 1 oder 2, wobei das Autorisierungstoken ein Datenfeld enthält, in dem eine eindeutige Autorisierungsidentifikationsnummer für Gruppenkommunikationssitzungen bereitgestellt wird, und ein Datenfeld, in dem eine eindeutige Autorisierungsidentifikationsnummer für Einzelkommunikationssitzungen bereitgestellt wird, wobei abhängig davon, ob das Mobilbenutzergerät eine Einzel- oder eine Gruppenkommunikationssitzung angefordert hat, das eine oder andere der Datenfelder mit einer Identifikationsnummer versehen wird.

4. Telekommunikationssystem nach Anspruch 1 oder 2, wobei das Autorisierungstoken ein Datenfeld enthält, in dem eine eindeutige Autorisierungsidentifikationsnummer bereitgestellt wird, und wobei ein erster Bereich von Werten des Datenfelds mit eindeutigen Autorisierungsnummern für Gruppenkommunikationssitzungen und ein zweiter Bereich von Werten des Datenfelds mit eindeutigen Autorisierungsnummern für Einzelkommunikationssitzungen assoziiert wird.

5. Telekommunikationssystem nach einem der vorhergehenden Ansprüche, wobei die Call State Control Function für Folgendes betreibbar ist:
Übermitteln des Autorisierungstokens zu dem Mobilbenutzergerät, wobei das Mobilbenutzergerät als Reaktion auf den Empfang des Autorisierungstokens betreibbar ist,
um unter Verwendung des Autorisierungstokens eine Paketdatenprotokoll-Aktivierung durchzuführen, wobei das Paketfunknetz mit der Paketdatenprotokoll-Aktivierung auf den Empfang des Autorisierungstokens reagiert, um mit der Call State Control Funktion zu bestätigen, dass die mit dem Autorisierungstoken empfangene Autorisierungskennnummer für das Mobilbenutzergerät, aus dem das Autorisierungstoken empfangen wurde, korrekt ist, und wenn die Autorisierungskennungsnummer durch die Call State Control Function bestätigt wird, ist das Paketfunknetz betreibbar, um entweder einen zwischen dem Mobilbenutzergerät und mit anderen Kommunikationssitzungen gemeinsam benutzten gemeinsamen Paketkommunikationsträgern oder einen fest zugeordneten Paketkommunikationsträger zur Verwendung durch das Mobilbenutzergerät bereitzustellen.

6. Verfahren zum Bereitstellen einer Internet-Protokoll-Multimedia-Kommunikationssitzung für ein Mobilbenutzergerät (302) unter Verwendung eines Internet-Protokoll-Multimedia-Subsystems mit einer Call State Control Function (312), die betreibbar ist, um die Multimedia-Kommunikationssitzungen zu steuern, einem Heimatteilnehmerserver (314), der betreibbar ist, um mit dem Mobilbenutzergerät (302) assoziierte Informationen zur Bereitstellung der Kommunikationssitzung bereitzustellen, und einem Paketfunknetz mit einem Gateway-Unterstützungsknoten, der betreibbar ist, um einen PaketdatenprotokollKontext zur Steuerung der Übermittlung von Internet-Paketen zu und/oder von dem Paketfunknetz von und/oder zu dem Mobilbenutzergerät (302) über einen Paketkommunikationsträger bereitzustellen, wobei der Paketkommunikationsträger nicht für eine Internet-Protokoll-Version spezifisch ist, gemäß der die Internet-Pakete übermittelt werden, wobei das Verfahren Folgendes umfasst:
Bereitstellen einer Mobilkommunikationseinrichtung für das Mobilbenutzergerät (302), um die Multimedia-Kommunikationssitzung zu unterstützen,
Übermitteln einer Anforderungsnachricht von dem Mobilbenutzergerät (302) zu der Call State Control Function für die herzustellende Kommunikationssitzung,
Erzeugen eines Autorisierungstokens für das Mobilbenutzergerät (302) gemäß Teilnehmerinformationen, die einen Dienst repräsentieren, an dem das Mobilbenutzergerät (302) teilnimmt, wobei das Übermitteln einer Anforderungsnachricht Folgendes umfasst:
Übermitteln einer Anforderungsnachricht von dem Mobilbenutzergerät (302), die identifiziert, dass die angeforderte Kommunikationssitzung für eine Gruppenkommunikationssitzung, die ein Kommunikationsbetriebsmittel gemeinsam benutzt, oder eine Einzelkommunikationssitzung ist, für die ein Kommunikationsbetriebsmittel fest dem Mobilbenutzergerät (302) zugeordnet ist, und das Erzeugen des Autorisierungstokens Folgendes umfasst:
Erzeugen und Übermitteln eines Autorisierungstokens von der Serving Call State Control Function (312) zur Übermittlung zu dem Mobilbenutzergerät (302), wobei das Autorisierungstoken eine Anzeige bereitstellt, dass das Mobilbenutzergerät (302) entsprechend einen gemeinsamen Kommunikationsträger oder einen fest zugeordneten Kommunikationsträger, über den die Kommunikationssitzung unterstützt werden kann, verwenden kann, und
beim Empfang des Autorisierungstokens Senden einer Paketdatenprotokoll-Kontextanforderung von dem Mobilbenutzergerät (302) zu dem Gateway-Unterstützungsknoten, wobei die Paketdatenprotokoll-Kontextanforderung das Token und einen Paketdatenprotokoll-Kontexttypwert enthält, wodurch eine Anforderung der Herstellung des gemeinsamen Kommunikationsträgers gemäß einer Internet-Protokoll-Version und einer Internet-Protokoll-Adresse, die durch das Mobilbenutzergerät (302) spezifiziert wird, repräsentiert wird, wobei der Gateway-Unterstützungsknoten einen Kommunikationsträger gemäß der durch das Mobilbenutzergerät (302) spezifizierten Internet-Protokoll-Version herstellt.

7. Verfahren nach Anspruch 6, wobei das durch die Serving Call State Control Function erzeugte Autorisierungstoken ein Datenfeld enthält, das einen Autorisierungstyp angibt, der eine Autorisierung für eine Gruppenkommunikationssitzung oder eine Autorisierung für eine Einzelkommunikationssitzung ist.

8. Verfahren nach Anspruch 6 oder 7, wobei das Autorisierungstoken ein Datenfeld enthält, in dem eine eindeutige Autorisierungsidentifikationsnummer für Gruppenkommunikationssitzungen bereitgestellt wird, und ein Datenfeld, in dem eine eindeutige Autorisierungsidentifikationsnummer für Einzelkommunikationssitzungen bereitgestellt wird, wobei abhängig davon, ob das Mobilbenutzergerät eine Einzel- oder eine Gruppenkommunikationssitzung angefordert hat, das eine oder andere der Datenfelder mit einer Identifikationsnummer versehen wird.

9. Verfahren nach Anspruch 6 oder 7, wobei das Autorisierungstoken ein Datenfeld enthält, in dem eine eindeutige Autorisierungskennungsnummer bereitgestellt wird, und ein erster Bereich von Werten des Datenfelds mit eindeutigen Autorisierungsnummern für Gruppenkommunikationssitzungen und ein zweiter Bereich von Werten des Datenfelds mit eindeutigen Autorisierungsnummern für Einzelkommunikationssitzungen assoziiert wird.

10. Verfahren nach einem der Ansprüche 6 bis 9, umfassend:
Übermitteln des Autorisierungstokens zu dem Mobilbenutzergerät,
Durchführen einer Paketdatenprotokoll-Aktivierung unter Verwendung des Mobilbenutzergeräts unter Verwendung des Autorisierungstokens,
Reagieren auf den Empfang des Autorisierungstokens mit der Paketdatenprotokoll-Aktivierung, um mit der Call State Control Function zu bestätigen, dass die mit dem Autorisierungstoken empfangene Autorisierungskennungsnummer für das Mobilbenutzergerät, aus dem das Autorisierungstoken empfangen wurde, korrekt ist, und, wenn die Autorisierungskennungsnummer durch die Call State Control Function bestätigt wird,
Bereitstellen entweder eines gemeinsam zwischen dem Mobilbenutzergerät und mit anderen Kommunikationssitzungen zu benutzenden gemeinsamen Paketkommunika-tionsträgers oder eines fest zugeordneten Paketkommunikationsträgers zur Verwendung durch das Mobilbenutzergerät.

## Revendications

1. Système de télécommunications destiné à assurer une session de communications multimédia sous protocole Internet pour un équipement (302) d'utilisateur mobile, le système comportant:
un sous-système multimédia (308) sous protocole Internet doté d'une fonction (312) de contrôle d'états d'appel exploitable pour contrôler les sessions de communications multimédia, et un serveur (314) de rattachement d'abonné exploitable pour fournir des informations associées à l'équipement (302) d'utilisateur mobile afin d'assurer la session de communications,
un réseau radio par paquets exploitable pour offrir une fonctionnalité de communications mobiles à l'équipement (302) d'utilisateur mobile afin de prendre en charge la session de communications multimédia, le réseau radio par paquets comprenant un noeud passerelle de prise en charge exploitable pour fournir un contexte de protocole de paquets de données en vue de contrôler la communication des paquets Internet vers et / ou depuis le réseau radio par paquets depuis et / ou vers l'équipement (302) d'utilisateur mobile via un support de communication de paquets, le support de communication de paquets n'étant pas spécifique à une version de protocole Internet selon laquelle les paquets Internet sont communiqués,
la fonction (312) de contrôle d'états d'appel étant exploitable, en réponse à un message de demande émanant de l'équipement (302) d'utilisateur mobile visant à établir la session de communications, pour générer et communiquer un jeton d'autorisation destiné à l'équipement (302) d'utilisateur mobile selon des informations d'abonné représentant un service auquel l'équipement (302) d'utilisateur mobile s'est abonné, le message de demande émanant de l'équipement (302) d'utilisateur mobile précisant que la session de communications demandée est soit une session de communications de groupe partageant une ressource de communications, soit une session individuelle de communications pour laquelle une ressource de communications est dédiée à l'équipement (302) d'utilisateur mobile, le jeton d'autorisation généré par la fonction (312) de contrôle d'états d'appel en service en vue de sa communication à l'équipement (302) d'utilisateur mobile donnant une indication selon laquelle l'équipement (302) d'utilisateur mobile peut utiliser respectivement soit un support de communication commun, soit un support de communication dédié par le biais duquel la session de communications peut être prise en charge et,
suite à la réception du jeton d'autorisation, l'équipement (302) d'utilisateur mobile étant exploitable pour envoyer une demande de contexte de protocole de paquets de données au noeud passerelle de prise en charge, la demande de contexte de protocole de paquets de données incluant le jeton et une valeur de type de contexte de protocole de paquets de données représentant une demande d'établissement du support de communication commun selon une version de protocole Internet et une adresse de protocole Internet spécifiées par l'équipement (302) d'utilisateur mobile, le noeud passerelle de prise en charge étant exploitable, en réponse à la demande de contexte de protocole de paquets de données, pour établir un support de communication selon la version de protocole Internet spécifiée par l'équipement (302) d'utilisateur mobile.

2. Système de télécommunications selon la revendication 1, le jeton d'autorisation généré par la fonction de contrôle d'états d'appel en service comprenant un champ de données indiquant un type d'autorisation qui est soit une autorisation pour une session de communications de groupe, soit une autorisation pour une session individuelle de communications.

3. Système de télécommunications selon la revendication 1 ou 2, le jeton d'autorisation comprenant un champ de données où est fourni un numéro unique d'identification de l'autorisation pour des sessions de communications de groupe, et un champ de données où est fourni un numéro unique d'identification de l'autorisation pour des sessions individuelles de communications, l'un ou l'autre des champs de données étant pourvu d'un numéro d'identification selon que l'équipement d'utilisateur mobile a demandé une session de communications individuelle ou de groupe.

4. Système de télécommunications selon la revendication 1 ou 2, le jeton d'autorisation comprenant un champ de données où est fourni un numéro unique d'identification de l'autorisation, et une première plage de valeurs du champ de données étant associée à des numéros uniques d'autorisations pour des sessions de communications de groupe et une deuxième plage de valeurs du champ de données étant associée à des numéros uniques d'autorisations pour des sessions individuelles de communications.

5. Système de télécommunications selon l'une quelconque des revendications précédentes, la fonction de contrôle d'états d'appel étant exploitable pour communiquer le jeton d'autorisation à l'équipement d'utilisateur mobile, l'équipement d'utilisateur mobile étant exploitable, en réponse à la réception du jeton d'autorisation,
pour effectuer une activation de protocole de paquets de données à l'aide du jeton d'autorisation, le réseau radio par paquets réagissant à la réception du jeton d'autorisation par l'activation d'un protocole de paquets de données pour confirmer auprès de la fonction de contrôle d'états d'appel que le numéro identifiant d'autorisation reçu avec le jeton d'autorisation est correct pour l'équipement d'utilisateur mobile en provenance duquel le jeton d'autorisation a été reçu, et si le numéro identifiant d'autorisation est confirmé par la fonction de contrôle d'états d'appel, le réseau radio par paquets est exploitable pour fournir soit un support commun de communications par paquets à partager entre l'équipement d'utilisateur mobile et d'autres sessions de communications, soit un support dédié de communications par paquets à utiliser par l'équipement d'utilisateur mobile.

6. Procédé visant à assurer une session de communications multimédia sous protocole Internet pour un équipement (302) d'utilisateur mobile à l'aide d'un sous-système multimédia sous protocole Internet, comprenant une fonction (312) de contrôle d'états d'appel exploitable pour contrôler les sessions de communications multimédia, et un serveur (314) de rattachement d'abonné exploitable pour fournir des informations associées à l'équipement (302) d'utilisateur mobile afin d'assurer la session de communications, et un réseau radio par paquets comprenant un noeud passerelle de prise en charge exploitable pour fournir un contexte de protocole de paquets de données en vue de contrôler la communication des paquets Internet vers et / ou depuis le réseau radio par paquets depuis et / ou vers l'équipement (302) d'utilisateur mobile via un support de communication de paquets, le support de communication de paquets n'étant pas spécifique à une version de protocole Internet selon laquelle les paquets Internet sont communiqués, le procédé comportant les étapes consistant à
offrir une fonctionnalité de communications mobiles à l'équipement (302) d'utilisateur mobile afin de prendre en charge la session de communications multimédia, communiquer un message de demande de l'équipement (302) d'utilisateur mobile à la fonction de contrôle d'états d'appel en vue d'établir la session de communications, générer un jeton d'autorisation destiné à l'équipement (302) d'utilisateur mobile selon des informations d'abonné représentant un service auquel l'équipement (302) d'utilisateur mobile s'est abonné, la communication d'un message de demande comportant l'étape consistant à
communiquer un message de demande de l'équipement (302) d'utilisateur mobile précisant que la session de communications demandée est soit une session de communications de groupe partageant une ressource de communications, soit une session individuelle de communications pour laquelle une ressource de communications est dédiée à l'équipement (302) d'utilisateur mobile, et la génération du jeton d'autorisation comportant les étapes consistant à
générer et communiquer un jeton d'autorisation de la fonction (312) de contrôle d'états d'appel en service en vue de sa communication à l'équipement (302) d'utilisateur mobile, le jeton d'autorisation donnant une indication selon laquelle l'équipement (302) d'utilisateur mobile peut utiliser respectivement soit un support de communication commun, soit un support de communication dédié par le biais duquel la session de communications peut être prise en charge, et
suite à la réception du jeton d'autorisation, envoyer une demande de contexte de protocole de paquets de données de l'équipement (302) d'utilisateur mobile au noeud passerelle de prise en charge, la demande de contexte de protocole de paquets de données incluant le jeton et une valeur de type de contexte de protocole de paquets de données représentant une demande d'établissement du support de communication selon une version de protocole Internet et une adresse de protocole Internet spécifiées par l'équipement (302) d'utilisateur mobile, le noeud passerelle de prise en charge établissant un support de communication selon la version de protocole Internet spécifiée par l'équipement (302) d'utilisateur mobile.

7. Procédé selon la revendication 6, le jeton d'autorisation généré par la fonction de contrôle d'états d'appel en service comprenant un champ de données indiquant un type d'autorisation qui est soit une autorisation pour une session de communications de groupe, soit une autorisation pour une session individuelle de communications.

8. Procédé selon la revendication 6 ou 7, le jeton d'autorisation comprenant un champ de données où est fourni un numéro unique d'identification de l'autorisation pour des sessions de communications de groupe, et un champ de données où est fourni un numéro unique d'identification de l'autorisation pour des sessions individuelles de communications, l'un ou l'autre des champs de données étant pourvu d'un numéro d'identification selon que l'équipement d'utilisateur mobile a demandé une session de communications individuelle ou de groupe.

9. Procédé selon la revendication 6 ou 7, le jeton d'autorisation comprenant un champ de données où est fourni un numéro unique d'identification de l'autorisation, et une première plage de valeurs du champ de données étant associée à des numéros uniques d'autorisations pour des sessions de communications de groupe et une deuxième plage de valeurs du champ de données étant associée à des numéros uniques d'autorisations pour des sessions individuelles de communications.

10. Procédé selon l'une quelconque des revendications 6 à 9, comportant les étapes consistant à
communiquer le jeton d'autorisation à l'équipement d'utilisateur mobile,
effectuer, au moyen de l'équipement d'utilisateur mobile, une activation de protocole de paquets de données à l'aide du jeton d'autorisation,
réagir à la réception du jeton d'autorisation par l'activation d'un protocole de paquets de données pour confirmer auprès de la fonction de contrôle d'états d'appel que le numéro identifiant d'autorisation reçu avec le jeton d'autorisation est correct pour l'équipement d'utilisateur mobile en provenance duquel le jeton d'autorisation a été reçu, et si le numéro identifiant d'autorisation est confirmé par la fonction de contrôle d'états d'appel,
fournir soit un support commun de communications par paquets à partager entre l'équipement d'utilisateur mobile et d'autres sessions de communications, soit un support dédié de communications par paquets à utiliser par l'équipement d'utilisateur mobile.
